# FASCICULE DE BREVET EUROPEEN

(11) **EP 0 365 384 B1**
(45) Date de publication et mention de la délivrance du brevet: **24.11.1993**
(21) Numéro de dépôt: 89402646.7
(22) Date de dépôt: 27.09.1989
(51) Int. Cl.: A01N 59/18, C07F 3/12

(54) **Chlorofibres ayant un caractère antiseptique permanent et procédé pour les obtenir**
Permanent antiseptische, Chlor enthaltende Fasern und Verfahren zu deren Herstellung
Permanent antiseptical chlorofibres and process for their preparation

(30) Priorité: 27.09.1988 FR 8813059
(43) Date de publication de la demande: 25.04.1990
(73) Titulaire: Centre Technique Industriel dit: INSTITUT TEXTILE DE FRANCE, 92223 Bagneux Cédex (FR); RHOVYL, 55310 Tronville en Barrois (FR)
(72) Inventeur: Bourgeois, Michel, F-69003 Lyon (FR); Chatelin, Roger, F-69380 Lissieu par Lozanne (FR); Wattiez, Daniel, F-69380 Lissieu par Lozanne (FR); Sotton, Michel, F-69450 St Cyr au Mont d'Or (FR); Belet, Francois, F-55310 Tronville en Barrois (FR); Achard, Georges, F-69150 Decines (FR)
(74) Mandataire: Hénnion, Jean-Claude

(56) Documents cités:
- EP-A- 0 116 489
- EP-A- 0 313 419

## Description

La présente invention concerne un matériau fibreux à base de polychlorure de vinyle, qui sera désigné sous le terme général de chlorofibre, ayant un caractère antiseptique permanent, même après plusieurs lavages, sans diminution significative du caractère antiseptique.

On a déjà décrit, notamment dans le brevet français N°83.00.442, l'utilisation de certains dérivés du mercurobutol pour la protection de supports textiles en vue de leur conférer un caractère antiseptique. Ces dérivés connus comportent , lié au noyau phénolique du mercurobutol, un groupement fonctionnel capable d'intervenir dans une réaction de polymérisation ou de polyaddition, par exemple un groupement allylique, vinylique ou acrylique. La protection du support textile est obtenue en faisant réagir ledit dérivé sur la structure polymérique du support textile grâce à une réaction de polymérisation ou de polyaddition. De préférence cette réaction est une réaction de greffage et met en oeuvre un monomère. Ainsi la structure du polymère textile comporte des greffons sur lesquels sont liés les dérivés du mercurobutol.

Cette technique connue présente l'inconvénient de nécessiter un traitement particulier sur le matériau textile. Ce traitement met en oeuvre un réactif complémentaire dans le cas du greffage, avec une localisation du dérivé antiseptique sur les greffons.

Or on a trouvé, et c'est ce qui fait l'objet de l'invention, un matériau polymérique fibreux, notamment textile, qui présente un caractère antiseptique permanent, sans avoir l'inconvénient constaté. Ce matériau est à base de polychlorure de vinyle. Selon l'invention il comporte, réparti dans sa structure polymérique à l'état de dispersion sensiblement moléculaire et quasiment non relargable, au moins un dérivé antiseptique mercuriel comportant au moins un noyau benzénique et comprenant d'une part au moins un radical HgX dans lequel X est choisi parmi F, Cl, Br, I, OH, CH₃COO, CN, SCN, NO₃ et OB(OH)₂, et d'autre part , lié à un noyau benzénique , au moins un groupement -OR ou - COOR dans lequel R est un groupement fonctionnel capable d'intervenir dans une réaction de polymérisation ou de polyaddition.

Ainsi l'agent antiseptique est réparti dans la structure polymérique du matériau fibreux à l'état de dispersion sensiblement moléculaire. Cette répartition est homogène dans toute la masse du matériau. Elle est en tout point différente de celle que l'on peut rencontrer dans les inclusions traditionnelles dans lesquelles le produit d'inclusion se présente sous forme d'agrégats de taille importante, plus ou moins bien répartis dans la masse du matériau.

De plus, contrairement à ce que l'on aurait pu attendre d'une présentation de l'agent antiseptique à l'état de dispersion sensiblement moléculaire, celui-ci est quasiment non relargable , c'est-à-dire qu'il reste en place dans la structure polymérique même après plusieurs lavages. On peut tenter de donner une explication à ce caractère de permanence, par les possibles interactions entre le polychlorure de vinyle et la liaison éthylénique du groupement fonctionnel R.

La présence du mercure , sous forme d'au moins un radical HgX, confère au dérivé son caractère antiseptique. Par exemple dans le cas où le dérivé mercuriel est un dérivé du mercurobutol, le caractère antiseptique est du même ordre que celui du mercurobutol.

De préférence dans les dérivés antiseptiques mercuriels, inclus dans un matériau fibreux à base de polychlorure de vinyle, à l'état de dispersion sensiblement moléculaire et quasiment non relargable, le radical HgX est lié au noyau benzénique ; de préférence aussi ils comprennent, lié au noyau benzénique, au moins un groupement alkyl ayant un nombre de carbone inférieur ou égal à 5.

Les dérivés préférés ont comme formule générale : 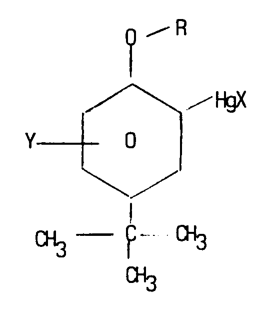
dans laquelle Y est H ou HgX.

Parmi ceux-ci on peut citer le bromomercuri-2 tertiobutyl-4 phénol allyl-éther, pour lequel R est le groupement allyle (CH₂ = CH - CH₂-) et Y est H,et le bromomercuri-2 tertiobutyl-4 phénol acrylate pour lequel R est le groupement acrylique (CH₂ = CH - CO) et Y est H.

Les dérivés antiseptiques mercuriels , inclus dans le matériau fibreux à base de polychlorure de vinyle, peuvent être éventuellement en mélange ; par exemple on peut avoir à la fois le bromomercuri 2 tertiobutyl-4 phénol allyl-éther et le bromo-chloromercuri-2,6 tertiobutyl-4 phénol allyl-éther en proportion respectivement de 90/10.

Le matériau fibreux à base de polychlorure de vinyle est sous forme de fibres, de fils, de tissus, tricots, articles confectionnés ou de non-tissé. Sous quelque forme que ce soit, il conserve des propriétés antiseptiques.

C'est un autre objet de l'invention de protéger un procédé de fabrication du matériau polymérique fibreux précité. Ce procédé est du type connu selon lequel le polychlorure de vinyle est dissous dans un solvant à base de sulfure de carbone et d'acétone puis filé . Selon l'invention, on incorpore avant filage, dans le collodion constitué par le polychlorure de vinyle dissous dans le solvant au moins un dérivé antiseptique mercuriel comportant au moins un noyau benzénique et comprenant d'une part au moins un radical HgX dans lequel X est choisi parmi F, Cl, Br, I, OH, CH₃COO, CN, SCN, NO₃ et OB(OH)₂, et d'autre part, lié à un noyau benzénique , au moins un groupement -OR ou -COOR dans lequel R est un groupement fonctionnel capable d'intervenir dans une réaction de polymérisation ou de polyaddition. On a remarqué que les dérivés mercuriels précités étaient eux-mêmes solubles dans le solvant à base de sulfure de carbone et d'acétone, utilisé pour réaliser le collodion de polychlorure de vinyle. Grâce à cette mise en solution, lesdits dérivés sont répartis dans le collodion de manière homogène et sensiblement moléculaire, répartition qu'ils conserveront après filage dans le matériau fibreux.

De préférence le dérivé mercuriel est incorporé dans le collodion par dissolution dans le solvant, préalablement à la dissolution du polychlorure de vinyle.

L'invention, et les avantages qu'elle procure, seront mieux compris à la lecture de la description qui va maintenant être faite d'un exemple complet du mode préféré de l'invention, comprenant la fabrication du matériau polymérique , la définition de la structure du matériau et des propriétés antiseptiques d'articles réalisés avec ledit matériau.

Le dérivé mercuriel retenu est le bromomercuri-2 tertiobutyl-4 phénol allyl-éther. Pour obtenir ce dérivé, on part du mercurobutol qui est un produit standard sur lequel on fait réagir le bromure d'allyle selon le schéma suivant : 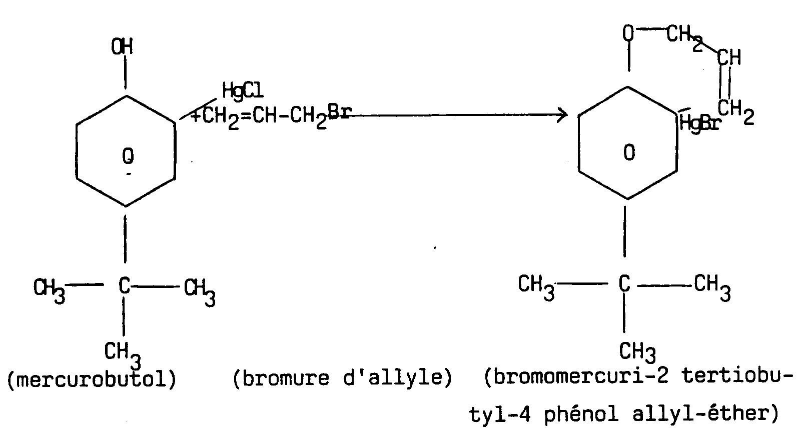
Plus précisément, on est parti de 9,3 g de mercurobutol que l'on dissout dans 50 ml d'alcool dénaturé à chaud. On ajoute doucement 2 g de potasse. Il se forme un précipité blanc épais. On ajoute 4,4 ml de bromure d'allyle dans 21 ml d'alcool dénaturé. On mélange avec le précipité qui devient plus fluide. On laisse chauffer deux heures à la température d'ébullition de l'alcool, puis on filtre à chaud. On obtient 9,43 g de bromomercuri-2 tertiobutyl-4 phénol allyl-éther, avec un rendement de 92 %. Ce produit est pur, comme on a pu le vérifier par chromatographie couche mince. Sa température de fusion est de 100°C. Il se présente sous la forme d'une poudre blanche, insoluble dans l'eau.

On ajoute ce produit, que l'on désignera dans la suite de la présente description sous le terme de dérivé, à un mélange de sulfure de carbone et d'acétone, qui est le solvant habituel du polychlorure de vinyle dans le filage des chlorofibres, dans lequel, ont été incorporés différents stabilisants. On place la solution obtenue en milieu réfrigérant, à -18°C. Après refroidissement, on y incorpore le polymère de polychlorure de vinyle, qui est aussi à -18°C, à l'état de poudre. Après agitation, on verse le mélange dans le pot-piston de l'installation de filage. La température remontant lentement à 25°C, la viscosité du mélange augmente jusqu'à des valeurs de l'ordre de 20.000 P (2000 Pl). C'est ce mélange visqueux qui est le collodion, matériau de base du filage.

Le collodion est compressé dans le pot-piston, passe dans un premier échangeur thermique à 120°C, un second échangeur thermique à 75°C, puis sur un ensemble de filtration destiné à éliminer les impuretés , les bulles éventuelles, ainsi que les insolubles, et destiné également à uniformiser le débit et la vitesse du collodion avant l'entrée dans la filière.

La filière mise en oeuvre , dans le cas présent, est une filière 80 brins, 60 micromètres. La vitesse de filage est de 180 m/mn. A la sortie de la filière, le fil subit un léger étirage de 1,1 dans la cellule de récupération, il est récupéré dans un pot rotatif, après avoir reçu un ensimage adéquat au moyen d'un galet lécheur. Il est ensuite repris pour être étiré et fixé de manière classique dans le filage des chlorofibres.

Ce matériau fibreux, à base de polychlorure de vinyle, obtenu comporte le dérivé réparti dans sa structure polymérique à l'état de dispersion sensiblement moléculaire et quasiment non relargable.

Le suivi du dérivé au cours des différentes phases du procédé de fabrication ainsi que dans la chlorofibre obtenue est réalisé par dosage du mercure par méthode colorimétrique à la dithizone, après minéralisation des fibres en milieu acide et oxydant (acide sulfurique et permanganate de potassium). Pour des concentrations de dérivés de l'ordre de 1 à 2 pour mille par rapport au polychlorure de vinyle, on a constaté aucune perte du dérivé , le dérivé mis en oeuvre dans le solvant se retrouvant intégralement dans la chlorofibre.

Sur la chlorofibre, on procède à plusieurs extractions au méthanol, qui est un solvant du dérivé, et on ne constate pas de modification significative de la quantité de dérivé dans le polymère fibreux ; de même après plusieurs lavages ménagers, sur des articles confectionnés et réalisés avec la chlorofibre. Compte-tenu de la précision des mesures des méthodes actuelles, on peut dire que le dérivé est quasiment non relargable du matériau.

Par ailleurs, l'analyse microscopique de la chlorofibre ne permet pas de déceler la présence du dérivé dans la structure polymérique, y compris à un grossissement de x 100.000 par microscopie électronique à balayage (MEB) ou par microscopie électronique à transmission (MET). Ainsi le dérivé ne se trouve pas sous la forme d'agrégats qui sont visibles par analyse microscopique , mais à l'état de dispersion sensiblement moléculaire dans toute la structure polymérique du matériau.

### 1° exemple :

Pour vérifier la protection antiseptique apportée par le dérivé dans la structure polymérique de la chlorofibre , on a effectué des tests en milieu gélosé avec l'Escherichia coli 7624 IP, 25922 ATCC comme souche bactérienne. Le milieu gélosé est un milieu Mueller Hinton référence 51861 Bio Mérieux, comportant en g/ld'eau distillée les composants suivants : à pH 7,4 :

| | |
|---|---|
| Infusion de viande de boeuf | 300 |
| Bio Case | 17,5 |
| Amidon | 1,5 |
| Gélose | 17 |

Le milieu gélosé est déposé dans une boîte de Pétri sur une épaisseur uniforme de 4 mm, puis ensemencé à l'aide d'une suspension de germes, à savoir 0,1 ml d'une suspension à 10⁵ germes/ml.

Des chlorofibres ayant différentes concentrations en dérivé ont été réalisées. Ces concentrations sont chiffrées en mg de mercure/g de chlorofibre :
Essai 1 : 4,76 mg Hg
Essai 2 : 0,95 mg Hg
Essai 3 : 0,47 mg Hg
Les chlorofibres , après filage , et extraction au méthanol, ont été tricotées et lavées. Pour chaque essai, des morceaux de tricot ont été déposés sur la gélose dans des boîtes de Pétri. Après un étuvage de 24 h à 35,5°C, on a observé la préparation à la loupe binoculaire. Dans tous les cas , quelle que soit la concentration en dérivé dans la chlorofibre on a constaté qu'à la périphérie du tricot, les colonies bactériennes s'étaient développées normalement mais que le tricot lui-même était bactériologiquement propre, n'étant le siège d'aucune amorce de développement et encore moins de prolifération bactérienne, contrairement à ce qui a pu être observé sur un tricot témoin, réalisé à partir de chlorofibre sans dérivé.

### 2ème exemple :

Cette série d'essais avait pour but d'approcher la concentration minimale de dérivé conduisant à une protection efficace de la chlorofibre. Les concentrations ont été les suivantes :
Essai 4 : 0,465 mg mercure/g chlorofibre
Essai 5 : 0,24 mg mercure/g chlorofibre
Essai 6 : 0 mg mercure/g chlorofibre (témoin).
Les tests sur gélose ont été réalisés avec une souche bactérienne qui fournit des colonies colorées : le Staphylococcus aureus (ATCC 9 144) de couleur orangée pour les grosses colonies. L' inoculum est plus concentré , à 10⁶ germes/ml. Les résultats obtenus sur l'essai 4 confirment ceux de l'exemple précédent ; le tricot est blanc et propre, toutes les colonies bactériennes restent à l'extérieur de la masse fibreuse : il n'y a pas de zone d'inhibition autour des fibres ni autour du tricot , donc pas de relargage du dérivé.

A l'inverse , en ce qui concerne le témoin (essai 6), on observe un développement bactérien important dans les fibres contenant le milieu de culture. Ce développement se traduit par une coloration jaune dans la masse du tricot, qui est jaune et sale.

En ce qui concerne l'essai 5, le résultat est proche de celui de l'essai 6 ; le tricot est jaune et sale , bien que l'intensité du coloris jaune soit moins importante. A cette concentration dans la chlorofibre , le dérivé ne semble pas apporter à l'article une protection antiseptique efficace. Le caractère antiseptique de l'article en chlorofibre selon l'invention est assuré par une concentration du dérivé au moins égale à 0,5%_{°}, ce qui correspond environ à 0,25 mg de mercure/g chlorofibre.

L'invention n'est pas limitée au produit et au mode de réalisation décrits ci-dessus à titre d'exemple . Il en couvre toutes les variantes. En particulier le dérivé antiseptique mercuriel inclus peut être obtenu à partir d'autres produits antiseptiques mercuriels connus , autres que le mercurobutol, par exemple le mercurophène, le mercurosal, le mercurochrome. Tous ces produits comportent dans leur formule au moins un noyau benzénique, au moins un radical HgX dans lequel X est OH et, lié au noyau benzénique au moins un groupement OR' ou COOR'. Ainsi un dérivé antiseptique mercuriel
sera facilement obtenu en faisant réagir sur l'un des produits mercuriels précités un halogénure d'allyle ; dans ce cas le groupement -OR sera le groupement -O-CH₂-CH=CH₂.

## Revendications

1. Matériau polymérique fibreux à base de polychlorure de vinyle caractérisé en ce qu'il comporte au moins un dérivé antiseptique mercuriel, réparti dans sa structure polymérique à l'état de dispersion sensiblement moléculaire et quasiment non relargable, ledit dérivé étant présent à une concentration d'au moins 0,25mg de mercure par gramme de chlorofibre, comportant au moins un noyau benzénique et comprenant d'une part au moins un radical HgX dans lequel X est choisi parmi F, Cl, Br, I, OH, CH₃COO, CN, SCN, NO₃ et OB(OH)₂, et d'autre part, lié à un noyau benzénique , au moins un groupe -OR ou -COOR dans lequel R est un groupement fonctionnel capable d'intervenir dans une réaction de polymérisation ou de polyaddition.

2. Matériau selon la revendication 1 caractérisé en ce que R est un groupement allylique, vinylique ou acrylique.

3. Matériau selon la revendication 1 caractérisé en ce que le groupement -HgX du dérivé mercuriel est lié au noyau benzénique.

4. Matériau selon la revendication 1 caractérisé en ce que , le dérivé comporte, lié au noyau benzénique un groupement alkyl ayant un nombre de carbone inférieur ou égal à 5.

5. Matériau selon la revendication 4 caractérisé en ce que le dérivé mercuriel répond à la formule générale : 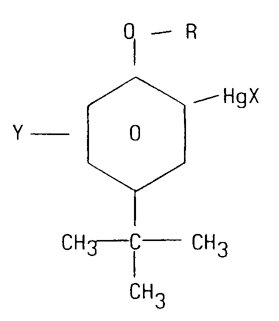 dans laquelle Y est H ou HgX.

6. Matériau selon la revendication 5 caractérisé en ce qu'il comporte , réparti dans sa structure, deux dérivés mercuriels répondant tous deux à la formule : 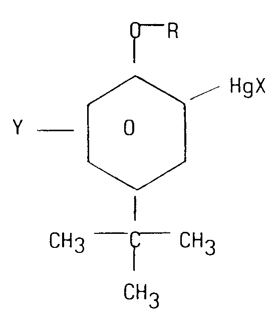 et pour lesquels Y est H dans le premier dérivé et Y est HgX dans le second dérivé.

7. Matériau selon la revendication 5 caractérisé en ce que le dérivé mercuriel est à une concentration au moins égale à 0,5%_{°} en poids par rapport à la chlorofibre, moyennant quoi il présente des propriétés antiseptiques permanentes, similaires à celles du mercurobutol.

8. Procédé de fabrication du matériau polymérique fibreux selon la revendication 1 du type selon lequel le polychlorure de vinyle est dissout dans un solvant à base de sulfure de carbone et d'acétone puis filé, caractérisé en ce qu'il consiste à incorporer dans le collodion constitué par le polychlorure de vinyle dissout dans le solvant,au moins un dérivé antiseptique mercuriel comportant au moins un noyau benzénique et comprenant d'une part au moins un radical HgX dans lequel X est choisi parmi F,Cl, Br, I, OH, CH₃COO, CN, SCN, NO₃ et OB (OH)₂, et d'autre part , lié à un noyau benzénique , au moins un groupement -OR ou -COOR dans lequel R est un groupement fonctionnel capable d'intervenir dans une réaction de polymérisation ou de polyaddition.

9. Procédé selon la revendication 8 caractérisé en ce qu'il consiste à dissoudre le dérivé mercuriel dans le solvant préalablement à la dissolution du polychlorure de vinyle.

## Claims

1. Fibrous polymeric material based on polyvinyl chloride characterized in that it contains at least one antiseptic mercury derivative distributed in its polymeric structure in the form of a substantially molecular and practically non-releasable dispersion, said derivative being present in a concentration of at least 0.25 mg of mercury per g of chlorofiber containing at least one benzene ring and comprising on the one hand at least one radical HgX, in which X is selected from F, Cl, Br, I, OH, CH₃COO, CN, SCN, NO₃ and OB(OH)₂, and on the other hand, bonded to a benzene ring, at least one group -OR or -COOR, in which R is a functional group which is capable of partaking in a polymerization or polyaddition reaction.

2. Material according to claim 1, characterized in that R is an allyl, vinyl or acrylic group.

3. Material according to claim 1, characterized in that the group -HgX of the mercury derivative is bonded to the benzene ring.

4. Material according to claim 1, characterized in that the derivative contains, bonded to the benzene ring, an alkyl group having a carbon number less than or equal to 5.

5. Material according to claim 4, characterized in that the mercury derivative has the general formula 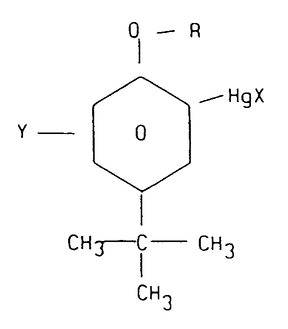 in which Y is H or HgX.

6. Material according to claim 5, characterized in that it contains, distributed in its structure, two mercury derivatives both having the formula 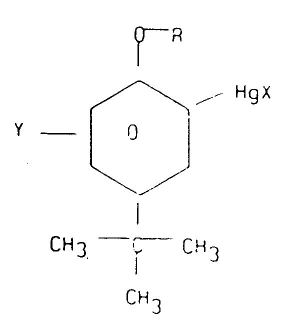 and in which Y is H in the first derivative and Y is HgX in the second derivative.

7. Material according to claim 5, characterized in that the mercury derivative has a concentration at least equal to 0.5 %_{°} by weight with respect to the chlorofiber, in return for which it exhibits permanent antiseptic properties, similar to those of the mercurobutol.

8. Process for the preparation of the fibrous polymeric material according to claim 1 of the type in which the polyvinyl chloride is dissolved in a solvent based on carbon disulfide and acetone and then spun, characterized in that it consists in incorporating into the collodion constituted by the polyvinyl chloride dissolved in the solvent, at least one mercury derivative said derivative containing at least one benzene ring and comprising on the one hand at least one radical HgX, in which X is selected from F, Cl, Br, I, OH, CH₃COO, CN, SCN, NO₃ and OB(OH)₂, and on the other hand, bonded to a benzene ring, at least one group -OR or -COOR, in which R is a functional group which is capable of partaking in a polymerization or polyaddition reaction.

9. Process according to claim 8, characterized in that it consists in dissolving the mercury derivative into the solvent prior to dissolving the polyvinyl chloride.

## Patentansprüche

1. Fasriges polymeres Material auf der Basis von Polyvinylchlorid, dadurch gekennzeichnet, daß es mindestens ein antiseptisches Quecksilberderivat aufweist, das in der Polymerstruktur in im wesentlichen molekulardispersen Zustand verteilt und nahezu nicht abspaltbar ist, wobei dieses Derivat in einer Konzentration von mindestens 0,25 mg Quecksilber pro g Chlorfaser vorliegt, mindestens einen Benzolkern aufweist und einerseits mindestens einen HgX-Rest enthält, worin X ausgewählt wird unter F, Cl, Br, I, OH, CH₃COO, CN, SCN, NO₃ und OB(OH)₂ und andererseits, gebunden an einen Benzolkern, mindestens eine -OR- oder -COOR-Gruppe, worin R eine funktionelle Gruppe ist, die zur Reaktion in einer Polymerisations- oder Polyadditionsreaktion geeignet ist.

2. Material nach Anspruch 1, dadurch gekennzeichnet, daß R eine Allyl-, Vinyl- oder Acrylgruppe ist.

3. Material nach Anspruch 1, dadurch gekennzeichnet, daß die HgX-Gruppe des Quecksilberderivats an den Benzolkern gebunden ist.

4. Material nach Anspruch 1, dadurch gekennzeichnet, daß das Derivat gebunden an den Benzolkern eine Alkylgruppe mit weniger als 5 oder 5 Kohlenstoffatomen aufweist.

5. Material nach Anspruch 4, dadurch gekennzeichnet, daß das Quecksilberderivat die folgende allgemeine Formel besitzt: 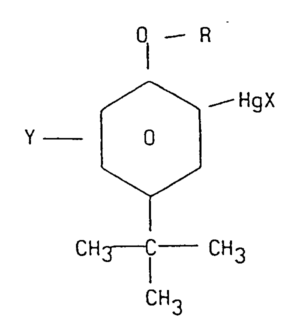 worin Y H oder HgX ist.

6. Material nach Anspruch 5, dadurch gekennzeichnet, daß es, verteilt über seine Struktur, zwei Quecksilberderivate aufweist, die die folgende Formel besitzen: 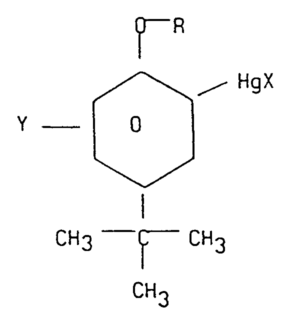 und bei denen beim ersten Derivat Y H und beim zweiten Derivat Y HgX ist.

7. Material nach Anspruch 5, dadurch gekennzeichnet, daß das Quecksilberderivat eine Konzentration von mindestens gleich 0,5 Gew.-% bezüglich der Chlorfaser aufweist, wodurch es dauerhaft antiseptische Eigenschaften ähnlich denen des Mercurobutol aufweist.

8. Herstellungsverfahren für das faserige polymere Material nach Anspruch 1 der Art, bei der das Polyvinylchlorid in einem Lösungsmittel auf Schwefelkohlenstoff- und Azetonbasis gelöst ist und dann in Fäden umgewandelt wird, dadurch gekennzeichnet, daß es darin besteht, in das von dem in dem Lösungsmittel gelösten Polyvinylchlorid gebildete Kollodium mindestens ein antiseptisches Quecksilberderivat zu inkorporieren, das mindestens einen Benzolkern aufweist und einerseits mindestens einen HgX-Rest enthält, worin X unter F, Cl, Br, I, OH, CH₃COO, CN, SCN, No₃ und OB(OH)₂ ausgewählt wird, und andererseits, gebunden an einen Benzolkern, mindestens eine -OR- oder -COOR-Gruppe, worin F eine funktionelle Gruppe ist, die zur Reaktion in einer Polymerisations- oder Polyadditionsreaktion geeignet ist.

9. Verfahren nach Anspruch 8, dadurch gekennzeichnet, daß es darin besteht, daß das Quecksilberderivat in dem Lösungsmittel vor der Auflösung des Polyvinylchlorids gelöst wird.
